# EUROPEAN PATENT APPLICATION

(11) **EP 2 487 786 A2**
(43) Date of publication of application: **15.08.2012**
(21) Application number: 12153284.0
(22) Date of filing: 31.01.2012
(51) Int. Cl.: H02M 7/483

(54) **Five-level power conversion device**

(30) Priority: 08.02.2011 JP 2011024608
(71) Applicant: Fuji Electric Co., Ltd., Kawasaki-shi 210-9530 (JP)
(72) Inventor: Yatsu, Makoto, Kawasaki-shi, 210-9530 (JP); Okuma, Yasuhiro, Kawasaki-shi, 210-9530 (JP); Odaka, Akihiro, Kawasaki-shi, 210-9530 (JP)
(74) Representative: Appelt, Christian W.

(57) **Abstract**

A five-level power converter includes a direct current power supply wherein two direct current power supplies are connected in series, and which includes three terminals, a first semiconductor switching series circuit, connected in parallel to the direct current power supply, wherein 2N semiconductor switches are connected in series, a third semiconductor switching series circuit connected in parallel to a second semiconductor switching series circuit, which is a series connection circuit of two semiconductor switches connected to an intermediate connection point of the first semiconductor switching series circuit, a capacitor connected in parallel to the third semiconductor switching series circuit, and a first alternating current switch connected between a series connection point of the third semiconductor switching series circuit and a series connection point of the direct current power supplies, wherein a series connection point of the second semiconductor switching series circuit is used as an alternating current terminal.

## Description

### BACKGROUND OF THE INVENTION

### 1. Technical Field

The present invention relates to a circuit configuration technology of a semiconductor power converter, and in particular, relates to a five-level power converter that directly outputs five levels of voltage.

### 2. Related Art

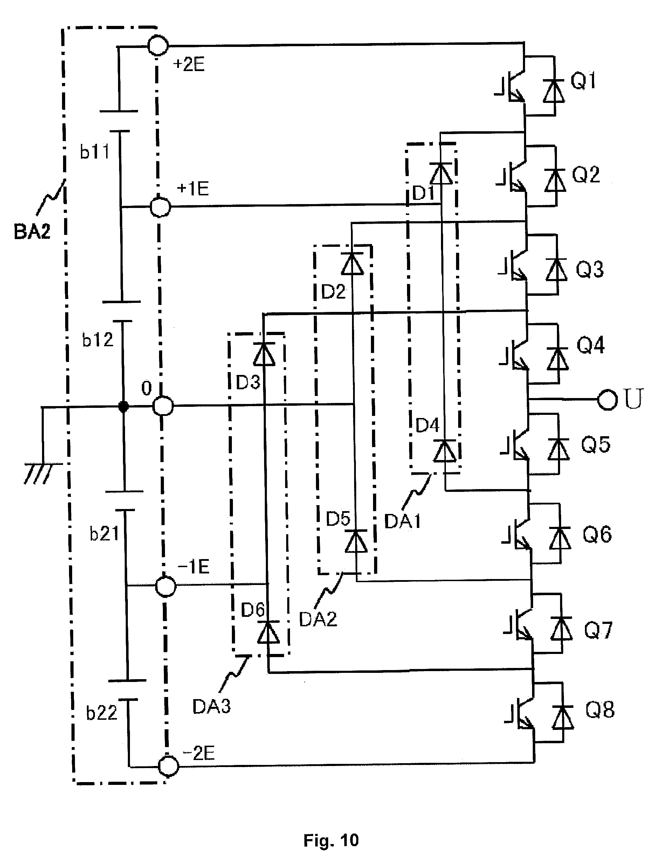

One phase of a five-level inverter circuit is shown as a heretofore known technology in Fig. 10. In Fig. 10, a series circuit of semiconductor switches Q1 to Q8 is connected between a positive terminal and a negative terminal of a direct current combination power supply BA2 wherein direct current single power supplies b11, b12, b21, and b22 are connected in series, and a connection point of the semiconductor switches Q4 and Q5, which is an intermediate connection point of the series circuit, is an alternating current output point U. Also, a diode series arm DA1 wherein diodes D1 and D4 are connected in series is connected between a connection point of the semiconductor switches Q1 and Q2 and a connection point of the semiconductor switches Q5 and Q6, and a series connection point inside the diode series arm DA1 is connected to a connection point of the direct current single power supplies b11 and b12. In the same way, a diode series arm DA2 wherein diodes D2 and D5 are connected in series is connected between a connection point of the semiconductor switches Q2 and Q3 and a connection point of the semiconductor switches Q6 and Q7, and a series connection point inside the diode series arm DA2 is connected to a connection point of the direct current single power supplies b12 and b21. A diode series arm DA3 wherein diodes D3 and D6 are connected in series is connected between a connection point of the semiconductor switches Q3 and Q4 and a connection point of the semiconductor switches Q7 and Q8, and a series connection point inside the diode series arm DA3 is connected to a connection point of the direct current single power supplies b21 and b22. Herein, when the voltage of each direct current single power supply is E, and the potential of the intermediate connection point of the direct current combination power supply BA2 is 0, the potential of the positive terminal of the direct current combination power supply BA2 is +2E, and the potential of the negative terminal is -2E.

With this kind of circuit configuration, a voltage of +2E is output to the alternating current output point U when the semiconductor switches Q1 to Q4 are turned on and the semiconductor switches Q5 to Q8 are turned off, and a voltage of +1E is output to the alternating current output point U when the semiconductor switches Q2 to Q5 are turned on and the semiconductor switches Q6 to Q8 and Q1 are turned off. Also, a zero voltage is output to the alternating current output point U when the semiconductor switches Q3 to Q6 are turned on and Q7, Q8, Q1, and Q2 are turned off. A voltage of -1E is output to the alternating current output point U when the semiconductor switches Q4 to Q7 are turned on and Q1 to Q3 and Q8 are turned off, and a voltage of -2E is output to the alternating current output point U when the semiconductor switches Q5 to Q8 are turned on and Q1 to Q4 are turned off. By regulating the on-off operation of each of the semiconductor switches Q1 to Q8 in this way, it is possible to output five levels of voltage to the alternating current output point U. A detailed operation of the circuit shown in Fig. 10 is disclosed in JP-A-2006-271042.

In the circuit shown in Fig. 10, the number of semiconductor switches through which a current passes when a voltage is output from the direct current combination power supply BA2 to the alternating current output point U is a maximum of four series. Because of this, steady-state on loss in the semiconductor switches increases, the conversion efficiency of the whole converter decreases, and furthermore, there is a problem in that size reduction and price reduction are difficult.
Also, as the power divided between the direct current single power supplies b11, b12, b21, and b22 is in principle not equal, even when the voltage and current output from the alternating current output point U have a positive/negative symmetric alternating current waveform, independent direct current power supplies are needed. Because of this, four single power supplies that can independently supply power are needed in the direct current combination power supply BA2, which is the input, and this is a large restriction on the fabrication of the converter.

### SUMMARY OF THE INVENTION

Consequently, an object of the invention is to provide a five-level power converter wherein loss occurring is reduced by reducing the number of semiconductor switches through which output current passes in comparison with a heretofore known case and, furthermore, wherein it is possible to operate with two single power supplies as a direct current input power supply.

In order to solve the heretofore described problems, in a first aspect of the invention, a five-level power conversion device includes a direct current power supply circuit wherein first and second direct current power supplies are connected in series, and which includes three terminals, a first semiconductor switching series circuit, connected in parallel to the direct current power supply circuit, wherein 2N (N is an integer of two or more) semiconductor switching elements wherein a diode is each connected in reverse parallel are connected in series, a third semiconductor switching series circuit configured of two semiconductor switching elements wherein a diode is each connected in reverse parallel connected in series, connected in parallel to a second semiconductor switching series circuit, which is a series connection circuit portion of two semiconductor switching elements connected to an intermediate connection point inside the first semiconductor switching series circuit, a capacitor connected in parallel to the third semiconductor switching series circuit, and a first alternating current switch connected between a series connection point inside the third semiconductor switching series circuit and a series connection point of the first and second direct current power supplies, wherein a series connection point inside the second semiconductor switching series circuit is used as an alternating current terminal.

In a second aspect of the invention, a second alternating current switch is connected between the series connection point inside the second semiconductor switching series circuit and the series connection point inside the third semiconductor switching series circuit.

In a third aspect of the invention, semiconductor switching elements in the first semiconductor switching series circuit other than semiconductor switching elements configuring the second semiconductor switching series circuit are each driven by an individual control signal.

In the invention, a five-level power conversion device includes a direct current power supply circuit wherein first and second direct current power supplies are connected in series, and which includes three terminals, a first semiconductor switching series circuit, connected in parallel to the direct current power supply circuit, wherein 2N (N is an integer of two or more) semiconductor switching elements wherein a diode is each connected in reverse parallel are connected in series, a third semiconductor switching series circuit configured of two semiconductor switching elements wherein a diode is each connected in reverse parallel connected in series, connected in parallel to a second semiconductor switching series circuit, which is a series connection circuit portion of two semiconductor switching elements connected to an intermediate connection point inside the first semiconductor switching series circuit, a capacitor connected in parallel to the third semiconductor switching series circuit, and a first alternating current switch connected between a series connection point inside the third semiconductor switching series circuit and a series connection point of the first and second direct current power supplies, wherein a series connection point inside the second semiconductor switching series circuit is used as an alternating current terminal. As a result of this, it is possible to output five levels of voltage from two direct current power supplies, and it is possible to reduce the number of semiconductor elements through which the current passes. Also, by connecting a second alternating current switch between the series connection point inside the second semiconductor switching series circuit and the series connection point inside the third semiconductor switching series circuit, it is possible to further reduce the number of semiconductor elements through which the current passes. As a result, it is possible to increase the efficiency, reduce the price, and reduce the size, of the converter.

### BRIEF DESCRIPTION OF THE DRAWINGS

Fig. 1 is a circuit diagram showing a first embodiment of the invention;
Fig. 2 shows an example of an alternating current output waveform of Fig. 1;
Fig. 3 is a mode diagram showing operation modes of the circuit of Fig. 1;
Fig. 4 is a circuit diagram showing a second embodiment of the invention;
Fig. 5 is a mode diagram showing operation modes of the circuit of Fig. 4;
Fig. 6 is a circuit diagram showing a third embodiment of the invention;
Fig. 7 is a mode diagram showing operation modes of the circuit of Fig. 6;
Fig. 8 is a circuit diagram showing a fourth embodiment of the invention;
Fig. 9 is a mode diagram showing operation modes of the circuit of Fig. 8; and
Fig. 10 is an example of a heretofore known five-level inverter circuit.

### DETAILED DESCRIPTION OF THE EMBODIMENTS

Amain point of the invention is that it includes a direct current power supply circuit wherein first and second direct current power supplies are connected in series, and which includes three terminals, a first semiconductor switching series circuit, connected in parallel to the direct current power supply circuit, wherein 2N (N is an integer of two or more) semiconductor switching elements wherein a diode is each connected in reverse parallel are connected in series, a third semiconductor switching series circuit configured of two semiconductor switching elements wherein a diode is each connected in reverse parallel connected in series, connected in parallel to a second semiconductor switching series circuit, which is a series connection circuit portion of two semiconductor switching elements connected to an intermediate connection point inside the first semiconductor switching series circuit, a capacitor connected in parallel to the third semiconductor switching series circuit, and a first alternating current switch connected between a series connection point inside the third semiconductor switching series circuit and a series connection point of the first and second direct current power supplies, wherein a series connection point inside the second semiconductor switching series circuit is used as an alternating current terminal.

### First Embodiment

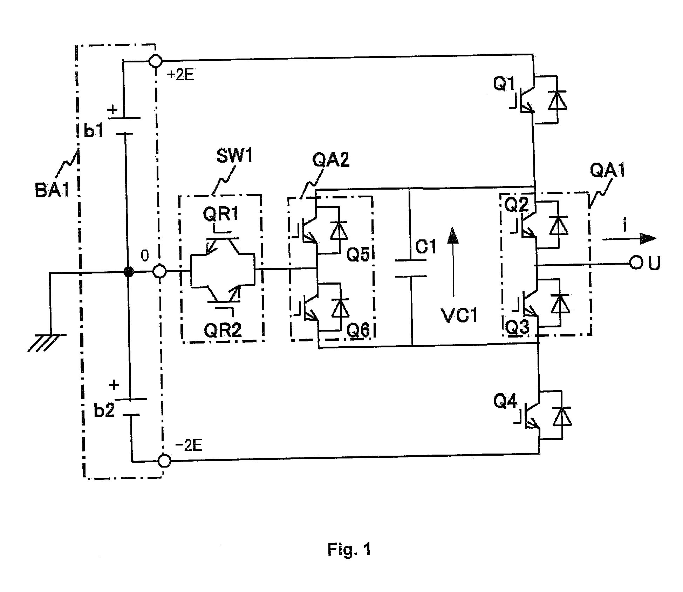

Fig. 1 shows a first embodiment of the invention. Fig. 1 is a circuit diagram showing one phase of a five-level inverter. It is possible to realize a three-phase inverter by using three of these circuits, and a single-phase inverter by using two of these circuits. A direct current combination power supply BA1 includes three terminals-a positive terminal, a zero terminal, and a negative terminal - in a configuration wherein direct current single power supplies b1 and b2, each having a voltage of 2E, are connected in series. This is an example wherein IGBTs are applied as semiconductor switches. The five-level inverter circuit is such that a semiconductor switching series circuit QA1 wherein semiconductor switches Q2 and Q3 are connected in series, a semiconductor switching series circuit QA2 wherein semiconductor switches Q5 and Q6 are connected in series, and a capacitor C1, are connected in parallel, a semiconductor switch Q1 is connected between the positive terminal of the direct current combination power supply BA1 and one terminal of the semiconductor switching series circuit QA1, a semiconductor switch Q4 is connected between the negative terminal of the direct current combination power supply BA1 and another terminal of the semiconductor switching series circuit QA1, an alternating current switch SW1 wherein semiconductor switches with reverse withstand voltage (reverse blocking semiconductor switches) QR1 and QR2 are connected in reverse parallel is connected between an internal connection point of the semiconductor switching series circuit QA2 and the zero terminal of the direct current combination power supply BA1, and a series connection point inside the semiconductor switching series circuit QA1 acts as an alternating current output point U.

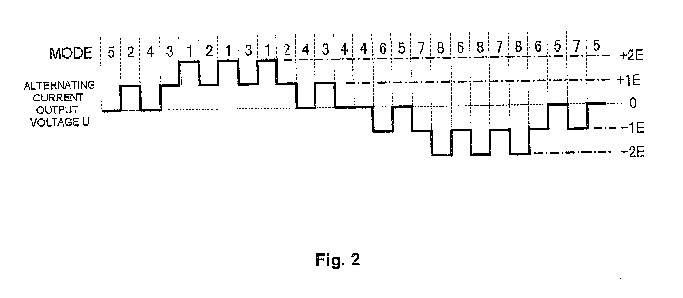

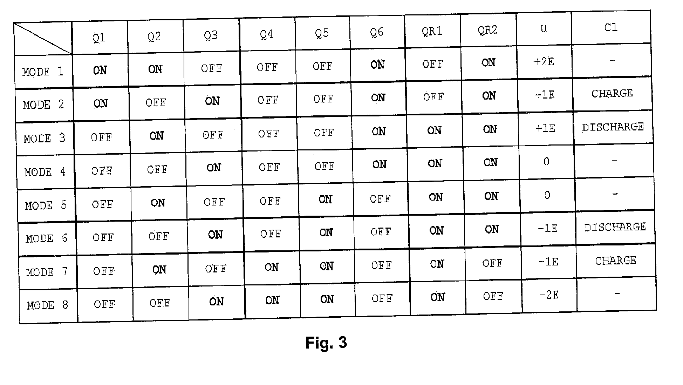

An example of an operation waveform with this kind of circuit configuration is shown in Fig. 2, and operation modes are shown in Fig. 3. "Mode 1" is a mode wherein the semiconductor switches Q1 and Q2 are turned on, Q4 and the semiconductor switch QR1 of the alternating current switch SW1 are turned off, and a voltage of +2E is output to the alternating current output point U. At this time, semiconductor switches through which an output current passes are the two switches Q1 and Q2. Furthermore, by turning the semiconductor switches Q5 and Q3 off and Q6 on, the voltage applied to the semiconductor switches is as follows. That is, the voltage applied to the semiconductor QR1 is clamped at a voltage obtained by subtracting a voltage VC1 of the capacitor C1 from the voltage 2E of the direct current single power supply b1, the voltage applied to the semiconductor switch Q4 is clamped at a voltage obtained by subtracting the voltage VC1 of the capacitor C1 from a voltage 4E between the positive terminal and negative terminal of the direct current combination power supply BA1, and the voltage applied to the semiconductor switch Q5 is clamped at the voltage VC1 of the capacitor C1. At this time, when the voltage VC1 of the capacitor C1 is controlled to 1E, the clamping voltages of the alternating current switch SW1 and semiconductor switches Q3, Q5, and Q4 are 1E, 1E, 1E, and 3E respectively.

"Mode 2" is a mode wherein Q1 and Q3 are turned on, Q2, Q4, Q5, and QR1 of SW1 are turned off, and a voltage obtained by subtracting the voltage VC1 from the voltage of +2E is output to the alternating current output point U. At this time, semiconductor switches through which the output current passes are the two switches Q1 and Q3. Furthermore, by turning the semiconductor switch Q6 on, the voltage applied to the alternating current switch SW1 is clamped at a voltage obtained by subtracting the voltage VC1 of the capacitor C1 from the voltage 2E of the direct current single power supply b1, and the voltage applied to the semiconductor switches Q2 and Q5 is clamped at VC1. Also, when the voltage VC1 of the capacitor C1 is controlled to 1E, the voltage of the alternating current output point U is +1E, and the clamping voltages of the alternating current switch SW1 and semiconductor switches Q2, Q5, and Q4 are 1E, 1E, 1E, and 3E respectively.

"Mode 3" is a mode wherein the alternating current switch SW1 and semiconductor switches Q2 and Q6 are turned on, the semiconductor switches Q1, Q3, Q4, and Q5 are turned off, and a voltage of +VC1 is output to the alternating current output point U. At this time, the three semiconductor switches through which the output current passes are the alternating current switch SW1 and semiconductor switches Q6 and Q2. Also, when the voltage VC1 of the capacitor C1 is controlled to +1E, the voltage of the alternating current output point U is +1E, and the clamping voltages of the semiconductor switches Q1, Q3, Q4, and Q5 are 1E, 1E, 2E, and 1E respectively.

"Mode 4" is a mode wherein the alternating current switch SW1 and semiconductor switches Q3 and Q6 are turned on, the semiconductor switches Q1, Q2, Q4, and Q5 are turned off, and a zero voltage is output to the alternating current output point U. At this time, the three semiconductor switches through which the output current passes are the alternating current switch SW1 and semiconductor switches Q6 and Q3. Also, when the voltage VC1 of the capacitor C1 is controlled to +1E, the clamping voltages of the semiconductor switches Q1, Q2, Q4, and Q5 are 1E, 1E, 2E, and 1E respectively.

"Mode 5" is a mode wherein the alternating current switch SW1 and semiconductor switches Q5 and Q2 are turned on, the semiconductor switches Q1, Q3, Q4, and Q6 are turned off, and a zero voltage is output to the alternating current output point U. At this time, the three semiconductor switches through which the output current passes are the alternating current switch SW1 and semiconductor switches Q5 and Q2. Also, when the voltage VC1 of the capacitor C1 is controlled to +1E, the clamping voltages of the semiconductor switches Q1, Q3, Q4, and Q6 are 2E, 1E, 1E, and 1E respectively.

"Mode 6" is a mode wherein the alternating current switch SW1 and semiconductor switches Q3 and Q5 are turned on, the semiconductor switches Q1, Q2, Q4, and Q6 are turned off, and a voltage of -VC1 is output to the alternating current output point U. At this time, the three semiconductor switches through which the output current passes are the alternating current switch SW1 and semiconductor switches Q5 and Q3. Also, when the voltage VC1 of the capacitor C1 is controlled to +1E, the voltage of the alternating current output point U is -1E, and the clamping voltages of the semiconductor switches Q1, Q2, Q4, and Q6 are 2E, 1E, 1E, and 1E respectively.

As a condition of "Mode 7", it is a mode wherein, when the semiconductor switches Q2 and Q4 are turned on, and the semiconductor switches Q1, Q3, and Q6 and QR2 of the alternating current switch SW1 are turned off, a voltage of -2E + VC1 is output to the alternating current output point U. At this time, semiconductor switches through which the output current passes are the two switches Q4 and Q2. Furthermore, by turning the semiconductor Q5 on, the voltage applied to the alternating current switch SW1 is clamped at a voltage obtained by adding the voltage VC1 of the capacitor C1 to the voltage (-2E) of the direct current single power supply b2, and the voltage applied to the semiconductor switches Q3 and Q6 is clamped at the voltage VC1 of the capacitor C1. Also, when the voltage VC1 of the capacitor C1 is controlled to 1E, the voltage of the alternating current output point U is -1E, and the clamping voltages of the alternating current switch SW1 and semiconductor switches Q1, Q3, and Q6 are 1E, 3E, 1E, and 1E respectively.

"Mode 8" is a mode wherein the semiconductor switches Q3 and Q4 are turned on, the semiconductor switch Q1 and QR2 of the alternating current switch SW1 are turned off, and a voltage of - 2E is output to the alternating current output point U. At this time, semiconductor switches through which the output current passes are the two switches Q3 and Q4. Furthermore, by turning the semiconductor switches Q2 and Q6 off and Q5 on, the voltage applied to the alternating current switch SW1 is clamped at a voltage obtained by adding the voltage VC1 of the capacitor C1 to the voltage (-2E) of the direct current single power supply b2, the voltage applied to the semiconductor switch Q1 is clamped at a voltage obtained by subtracting the voltage VC1 of the capacitor C1 from the voltage 4E between the positive terminal and negative terminal of the direct current combination power supply BA1, and the voltage applied to the semiconductor switch Q6 is clamped at VC1. At this time, when the voltage VC1 of the capacitor C1 is controlled to 1E, the clamping voltages of the alternating current switch SW1 and semiconductor switches Q1, Q2, and Q6 are 1E, 3E, 1E, and 1E respectively.

According to "Mode 1" to "Mode 8", five levels of voltage +2E, +1E, 0, -1E, and -2E can be output to the alternating current output point U. Herein, although both "Mode 2" and "Mode 3" have an output of +1E, when considering a time when the orientation of an alternating output current i from the alternating current output point U is positive, the capacitor C1 is charged in "Mode 2", and conversely, the capacitor C1 is discharged in "Mode 3". In the same way, the same relationship also applies for "Mode 6" and "Mode 7" when -1E is output to the alternating current output point U. Because of this, by optionally selecting "Mode 2" or "Mode 3" when a voltage of +1E is output to the alternating current output point U, and "Mode 6" or "Mode 7" when -1E is output, regulation of the voltage VC1 of the capacitor C1 is possible, and it is possible to constantly control VC1 to the vicinity of 1E.

### Second Embodiment

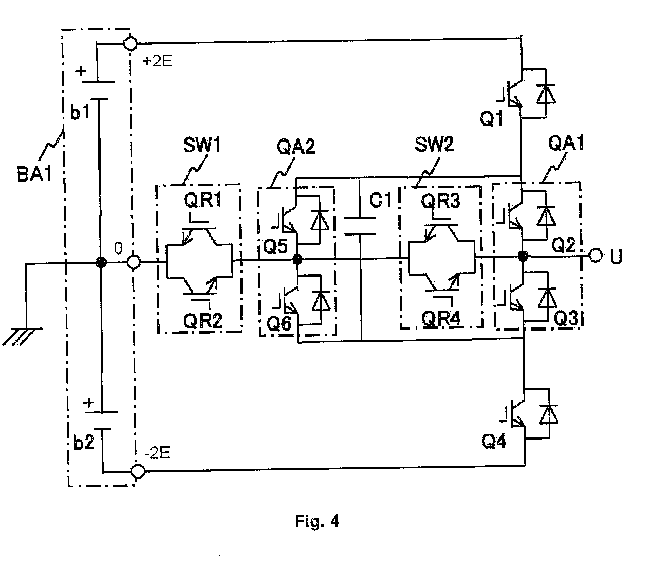

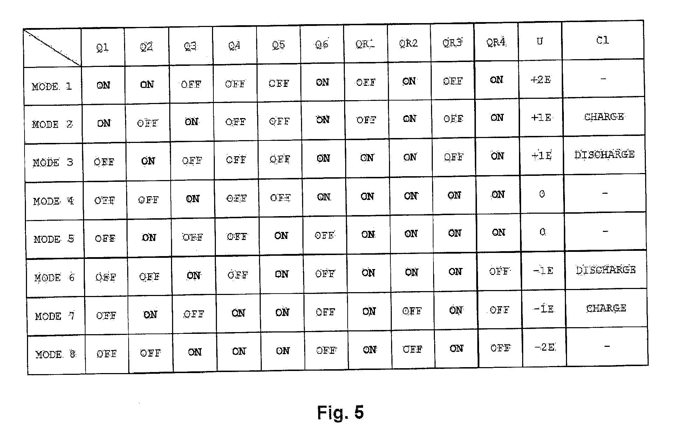

Fig. 4 shows a circuit diagram of a second embodiment of the invention, and Fig. 5 shows operation modes thereof. A difference from the first embodiment lies in the point that an alternating current switch SW2 wherein semiconductor switches QR3 and QR4 with reverse withstand voltage are connected in reverse parallel is additionally connected between the series connection point inside the semiconductor switching series circuit QA1, wherein the semiconductor switches Q2 and Q3 are connected in series, and the series connection point inside the semiconductor switching series circuit QA2, wherein the semiconductor switches Q5 and Q6 are connected in series. Operations of the semiconductor switches are such that, in all modes from "Mode 1" to "Mode 8", operations of the semiconductor switches Q1 to Q6 and alternating current switch SW1 are the same as in the circuit (Fig. 1) of the first embodiment. Also, operations of the semiconductor switches QR3 and QR4 of the added alternating current switch SW2 are such that QR3 is turned off in each of "Mode 1" to "Mode 3" and turned on in each of "Mode 4" to "Mode 8", while QR4 is turned on in each of "Mode 1" to "Mode 5" and turned off in each of "Mode 6" to "Mode 8".

According to these operations, as SW2 is turned on when a zero voltage is output to the alternating current voltage output point U in "Mode 4" and "Mode 5", the output current passes through only two semiconductors, the alternating current switches SW1 and SW2, in either mode, which is fewer than the three switches of the first embodiment (Fig. 1). As a result of this, conduction loss decreases, and it is possible to increase conversion efficiency.

### Third Embodiment

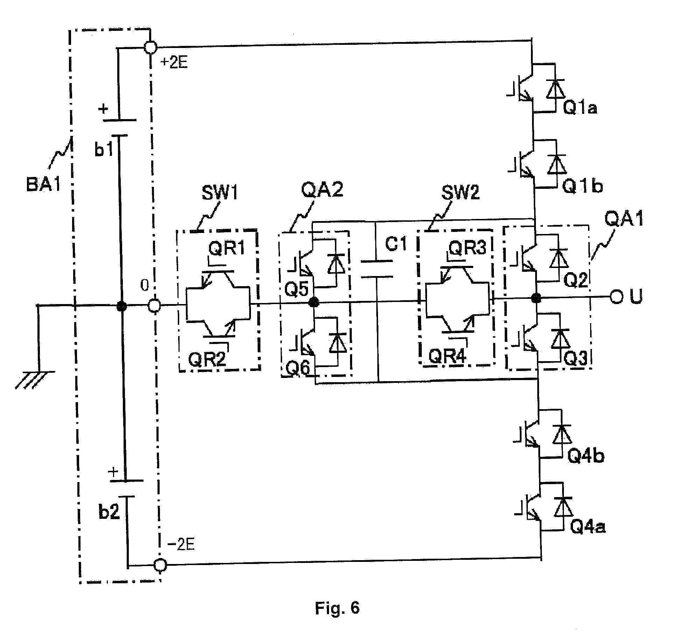

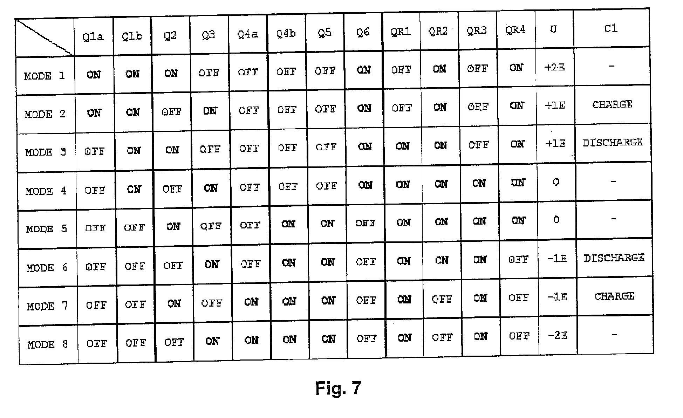

Fig. 6 shows a third embodiment of the invention, and Fig. 7 shows operation modes thereof. A difference from the second embodiment (Fig. 4) lies in the point that the semiconductor switch Q1 is changed to a series circuit of semiconductor switches Q1a and Q1b, and the semiconductor switch Q4 is changed to a series circuit of semiconductor switches Q4a and Q4b. Herein, an operation of each changed semiconductor switch is as follows. In "Mode 1" and "Mode 2", the semiconductor switches Q1a and Q1b are both turned on, and the semiconductor switches Q4a and Q4b are both turned off. In "Mode 3" and "Mode 4", only one of the semiconductor switches Q1a and Q1b is turned on, and the semiconductor switches Q4a and Q4b are both turned off. In "Mode 5" and "Mode 6", the semiconductor switches Q1a and Q1b are both turned off, and only one of the semiconductor switches Q4a and Q4b is turned on. In "Mode 7" and "Mode 8", Q1a and Q1b are both turned off, and Q4a and Q4b are both turned on.

By adopting these kinds of operation, it is possible to replace the semiconductor switches Q1a, Q1b, Q4a and Q4b with semiconductor switches having a withstand voltage in the region of half the withstand voltage of 3E necessary in principle for the semiconductor switches Q1 and Q4 in the second embodiment (Fig. 4). In this case, as there is individual switching using a semiconductor element with a low withstand voltage in an operation of shifting between modes, switching loss is reduced, and it is possible to reduce loss. For example, the IGBT switching characteristics and steady-state loss characteristics of an IGBT with a high withstand voltage of several kV or more are far worse than those of an IGBT with a low withstand voltage. In order to solve this problem, it is possible to apply an element with a low withstand voltage and superior characteristics by using the technology of this embodiment, and it is possible to reduce conversion loss.

### Fourth Embodiment

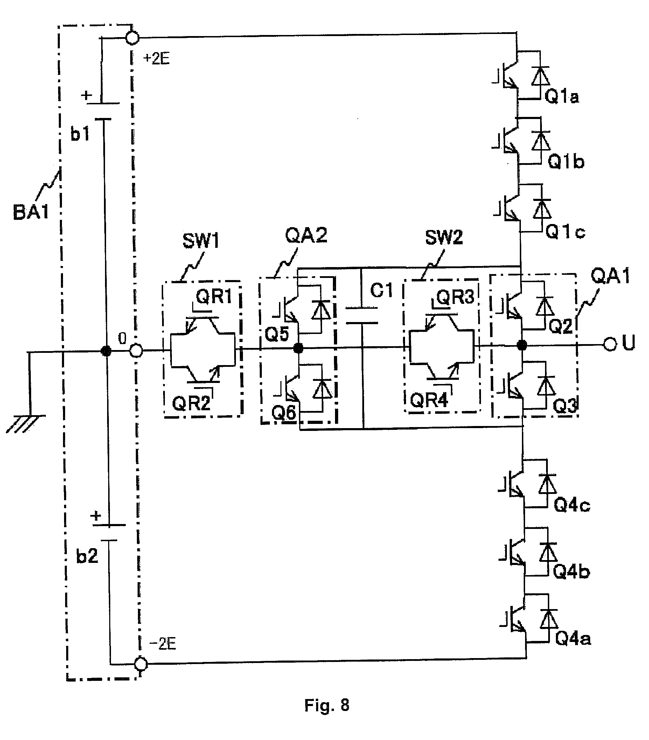

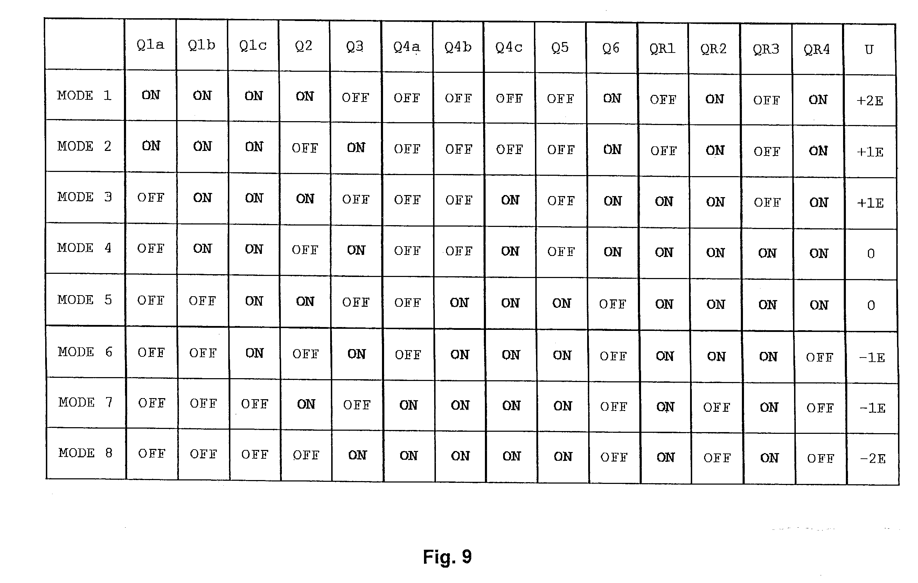

Fig. 8 shows a fourth embodiment of the invention, and Fig. 9 shows operation modes thereof. A difference from the second embodiment (Fig. 4) lies in the point that the semiconductor switch Q1 is changed to a series circuit of semiconductor switches Q1a, Q1b, and Q1c, and the semiconductor switch Q4 is changed to a series circuit of semiconductor switches Q4a, Q4b, and Q4c. Herein, an operation of each changed semiconductor switch is as follows. In "Mode 1" and "Mode 2", the semiconductor switches Q1a to Q1c are all turned on, and the semiconductor switches Q4a to Q4c are all turned off. In "Mode 3" and "Mode 4", only one of the semiconductor switches Q1a to Q1c is turned off, and only one of the semiconductor switches Q4a to Q4c is turned on. In "Mode 5" and "Mode 6", only one of the semiconductor switches Q1a to Q1c is turned on, and only one of the semiconductor switches Q4a to Q4c is turned off. In "Mode 7" and "Mode 8", the semiconductor switches Q1a to Q1c are all turned off, and the semiconductor switches Q4a to Q4c are all turned on.

By adopting these kinds of operation, it is possible to replace the semiconductor switches Q1a to Q1c and Q4a to Q4c with semiconductor switches that withstand 1E, which is one-third of the withstand voltage of 3E necessary in principle for Q1 and Q4 in Fig. 4. Consequently, it is possible to apply semiconductors that withstand the voltage of 1E applied in principal to all the semiconductor switches in Fig. 8. In particular, when configuring a converter with a high voltage output of several kV or more, it is possible to apply an easily available, high performance, low-priced IGBT with a low withstand voltage, and it is possible to contribute to an increase in efficiency and reduction in price of the converter.
In the embodiment, an example has been given of when reverse blocking IGBTs are connected in reverse parallel as an alternating current switch, but an alternating current switch can also be realized with a configuration wherein a semiconductor switch with no reverse withstand voltage and a diode are combined. Also, in the embodiment, a description has been given of an example with an inverter circuit that creates an alternating current from a direct current, but the invention is also applicable to a converter that creates a direct current from an alternating current.

The invention is a circuit technology for when configuring a high voltage, large capacity converter, and is applicable to a motor drive inverter, a grid connection converter, a direct current power supply, and the like.

## Claims

1. A five-level power converter, comprising:
a direct current power supply circuit wherein first and second direct current power supplies are connected in series, and which includes three terminals;
a first semiconductor switching series circuit, connected in parallel to the direct current power supply circuit, wherein 2N (N is an integer of two or more) semiconductor switching elements wherein a diode is each connected in reverse parallel are connected in series;
a third semiconductor switching series circuit configured of two semiconductor switching elements wherein a diode is each connected in reverse parallel connected in series, connected in parallel to a second semiconductor switching series circuit, which is a series connection circuit portion of two semiconductor switching elements connected to an intermediate connection point inside the first semiconductor switching series circuit;
a capacitor connected in parallel to the third semiconductor switching series circuit; and
a first alternating current switch connected between a series connection point inside the third semiconductor switching series circuit and a series connection point of the first and second direct current power supplies, wherein
a series connection point inside the second semiconductor switching series circuit is used as an alternating current terminal.

2. The five-level power converter according to claim 1, wherein
a second alternating current switch is connected between the series connection point inside the second semiconductor switching series circuit and the series connection point inside the third semiconductor switching series circuit.

3. The five-level power converter according to claim 1 or 2, wherein
semiconductor switching elements in the first semiconductor switching series circuit other than semiconductor switching elements configuring the second semiconductor switching series circuit are each driven by an individual control signal.
